# EUROPÄISCHE PATENTANMELDUNG

(11) **EP 4 725 626 A1**
(43) Veröffentlichungstag der Anmeldung: **15.04.2026**
(21) Anmeldenummer: 25207352.3
(22) Anmeldetag: 07.10.2025
(51) Int. Cl.: B22F 10/20, B22F 10/28, B22F 12/41, B22F 12/53, B33Y 10/00, B33Y 30/00, B33Y 40/00, B22F 1/052, B22F 10/32, B22F 12/70, B28B 1/00, B33Y 50/02

(54) **VERFAHREN ZUR HERSTELLUNG EINES DREIDIMENSIONALEN FORMKÖRPERS DURCH ADDITIVE FERTIGUNG**

(30) Priorität: 11.10.2024 DE 102024129436
(71) Anmelder: FIT AG, 92331 Lupburg (DE)
(72) Erfinder: Fruth, Carl, 92331 Lupburg (DE)
(74) Vertreter: Schneider, Andreas

(57) **Zusammenfassung**

Die Erfindung betrifft ein Verfahren zur Herstellung eines dreidimensionalen Formkörpers (1) durch additive Fertigung sowie eine entsprechende Vorrichtung. Um die Herstellung eines dreidimensionalen Formkörper zu vereinfachen, wird ein Verfahren vorgeschlagen, das dadurch gekennzeichnet ist, daß sich eine in einer körnigen Schüttung (3) positionierte Einbringungsvorrichtung (2, 16, 20) entlang eines Pfades (11) bewegt und daß mit Hilfe der Einbringungsvorrichtung (2, 16, 20) eine Einbringung in die Schüttung (3) erfolgt, wodurch in einem unterhalb der Oberfläche (6) der Schüttung (3) gebildeten Arbeitsraum (7) Aufbaumaterial (12) bereitgestellt und/oder eine Verfestigung von Aufbaumaterial (12) eingeleitet wird, wodurch der Formkörper (1) entsteht.

## Beschreibung

Die Erfindung betrifft ein Verfahren zur Herstellung eines dreidimensionalen Formkörpers durch additive Fertigung sowie eine entsprechende Vorrichtung.

### Additive Fertigungsverfahren, insbesondere

Schichtaufbauverfahren, sind aus dem Stand der Technik bekannt. Schichtbauverfahren dienen zur Herstellung von Bauteilen aus schichtweise aufgebrachtem, verfestigbarem Material. Dabei werden Schichten eines Aufbaumaterials sukzessive übereinander aufgetragen. Vor dem Auftragen der jeweils nächsten Schichten werden die dem Querschnitt des zu fertigenden Objekts entsprechenden Stellen in den jeweiligen Schichten selektiv verfestigt. Das Verfestigen erfolgt beispielsweise durch lokales Erhitzen eines pulverförmigen Schichtrohmaterials mit Hilfe einer Strahlungsquelle.

Nachteilig bei diesen bekannten Pulverbettverfahren ist es, daß das Aufbaumaterial jeweils in vollständigen Schichten aufgebracht wird, obwohl es nur an ausgewählten Stellen verfestigt wird. Daher wird stets eine große Menge an Aufbaumaterial benötigt.

Auch denn, wenn statt dessen Freiraumverfahren zur Anwendung kommen, bei denen das Aufbaumaterial zur Herstellung des Formkörpers aufgeschmolzen oder aber in flüssiger Form aufgebracht und anschließend verfestigt wird, wird der herzustellenden Formkörper stets auf einer besonderen, insbesondere höhenverstellbaren Aufbauplattform aufgebaut. Zudem besteht bei allen Freiraumverfahren die Notwendigkeit, bei Hinterschneidungen oder dergleichen mit zusätzlichen Stützstrukturen zu arbeiten.

Eine Aufgabe der vorliegenden Erfindung ist es, die Herstellung eines dreidimensionalen Formkörper zu vereinfachen.

Diese Aufgabe wird durch ein Verfahren nach Anspruch 1 bzw. durch eine Vorrichtung nach Anspruch 12 gelöst.

Das erfindungsgemäße Verfahren zur Herstellung eines dreidimensionalen Formkörpers durch additive Fertigung ist dadurch gekennzeichnet, daß sich eine in einer körnigen Schüttung positionierte Einbringungsvorrichtung entlang eines Pfades bewegt und daß mit Hilfe der Einbringungsvorrichtung eine Einbringung in die Schüttung erfolgt, durch welche Einbringung in einem unterhalb der Oberfläche der Schüttung gebildeten Arbeitsraum Aufbaumaterial bereitgestellt und/oder eine Verfestigung von Aufbaumaterial eingeleitet wird, durch welche Verfestigung der Formkörper entsteht.

Die erfindungsgemäße Vorrichtung zur Herstellung eines dreidimensionalen Formkörpers durch additive Fertigung umfaßt eine in einer körnigen Schüttung positionierbare Einbringungsvorrichtung und eine Steuerungseinheit, die so ausgebildet ist, daß die Einbringungsvorrichtung entlang eines Pfades bewegt wird und daß mit Hilfe der Einbringungsvorrichtung eine Einbringung in die Schüttung erfolgt, durch welche Einbringung in einem unterhalb der Oberfläche der Schüttung gebildeten Arbeitsraum Aufbaumaterial bereitgestellt und/oder eine Verfestigung von Aufbaumaterial eingeleitet wird, durch welche Verfestigung der Formkörper entsteht. Diese Vorrichtung ist insbesondere ausgebildet zur Ausführung des erfindungsgemäßen Verfahrens.

Vorteilhafte Ausführungen der Erfindung sind in den Unteransprüchen angegeben bzw. ergeben sich aus der nachfolgenden Beschreibung und/oder den beigefügten Figuren.

Die im Folgenden im Zusammenhang mit dem Verfahren erläuterten Vorteile und Ausgestaltungen gelten sinngemäß auch für die erfindungsgemäße Vorrichtung und umgekehrt.

Mit der Erfindung ist es möglich, die Herstellung eines dreidimensionalen Formkörper zu vereinfachen.

Insbesondere wird eine vergleichsweise geringe Menge an Aufbaumaterial benötigt. Dies wird gemäß einer Ausführungsform der Erfindung dadurch realisiert, daß Aufbaumaterial lediglich dort bereitgestellt wird, wo es tatsächlich für den Verfestigungsprozeß und damit die Herstellung des Formkörpers benötigt wird.

Die Erfindung betrifft ein additives Aufbauverfahren, genauer ein Verfahren zum additiven Aufbau eines Formkörpers. Insbesondere betrifft die Erfindung das dreidimensionale Formen eines Körpers innerhalb einer Schüttung, wobei sowohl das Einbringen von Material bzw. Energie als auch das Verfestigen unterhalb der Oberfläche der Schüttung erfolgt.

Wesentlich für die Erfindung ist der Einsatz einer Schüttung. Vorzugsweise dient diese Schüttung zur Bereitstellung eines für den Aufbau des Formteils notwendigen Arbeitsraumes im Inneren der Schüttung. Vorzugsweise unterstützt diese Schüttung durch eine allseitige Begrenzung dieses Arbeitsraumes zugleich die Formgebung des Formteils und/oder ermöglicht diese Formgebung überhaupt. Vorzugsweise stellt die Schüttung das Aufbaumaterial für das Formteil zur Verfügung oder ermöglicht die Bereitstellung oder Entstehung dieses Aufbaumaterials.

Aufgrund des Einsatzes der Schüttung entfällt die Notwendigkeit einer speziellen Aufbauplattform. Es ist lediglich eine geeignete Auflage für die Schüttung erforderlich. Die Auflage muß stabil genug sein, um die Schüttung und den darin aufgebauten Formkörper zu tragen. Die Auflage muß nicht plan sein. Da sich der hergestellte Formkörper allseitig innerhalb der Schüttung befindet, sind außerdem keine am Formkörper angebrachten, zusätzlichen Stützstrukturen notwendig.

Wesentlich für die Erfindung ist, daß der Aufbau des Formkörpers innerhalb einer Schüttung erfolgt. In keinem Fall erfolgt der Aufbau des Formkörpers innerhalb einer Flüssigkeit oder eines Gels; somit wird kein zusätzlicher Behälter zur Aufnahme einer Flüssigkeit oder eines Gels benötigt.

Gemäß einer Ausführungsform der Erfindung besteht die Schüttung aus fließfähigem Schüttungsmaterial (Schüttgut). Darunter wird Material verstanden, das körnige Partikel enthält. Es handelt sich mit anderen Worten um eine körnige Schüttung.

Gemäß einer Ausführungsform der Erfindung handelt es sich bei der Schüttung um eine schräge Schüttung, d.h. es existiert ein von der Art des körnigen Schüttungsmaterials abhängiger Schüttwinkel (Reibungswinkel). Die Schüttung ist vorzugsweise derart formstabil, daß ein zusätzlicher Behälter zur Aufnahme des Schüttungsmaterials oder Begrenzungselemente zur Begrenzung des Schüttungsmaterials nicht erforderlich sind. Es ist lediglich eine geeignete Auflage für die Schüttung erforderlich, wie beispielsweise eine Bodenplatte oder ein anderer geeigneter Untergrund. Je nach Anwendungsfall eignet sich auch der Erdboden als Auflage für die Schüttung.

Gemäß einer Ausführungsform der Erfindung ist die Auflage ortsfest, d.h. die Auflage verbleibt an einem Ort und wird nicht bewegt. Das bedeutet, daß auch die Schüttung und damit das herzustellende Formteil nicht bewegt werden. Vorzugsweise ist die Auflage während des gesamten Aufbauprozesses ortsfest, insbesondere bis zum Abschluß des Verfestigungsprozesses, d.h. bis zu einer vollständigen oder im wesentlichen vollständigen Verfestigung des Formteils. Nach Abschluß des Aufbauprozesses kann das Formteil aus der Schüttung entfernt, erforderlichenfalls von noch anhaftendem Material befreit und zur weiteren Verwendung an einen anderen Ort verbracht werden.

Die Fließeigenschaften des Schüttungsmaterials sind vorzugsweise derart, daß das Schüttungsmaterial ein gutes Fließverhalten zeigt, d.h. ohne Aufwand zum Fließen zu bringen ist. Es kann dabei fein- und/oder grobkörniges Schüttgut zur Anwendung kommen.

Gemäß einer Ausführungsform der Erfindung handelt es sich bei der Schüttung um eine trockene körnige Schüttung, insbesondere um eine trockene Festkörperschüttung, beispielsweise um eine Granulat- oder Pulverschüttung. So kann die Schüttung beispielsweise durch ein Kies- oder Schotterbett gebildet sein. Die Schüttung kann jedoch auch durch ein Pulverbett gebildet sein, insbesondere aus Metall- oder Keramikpulver bestehen.

Unter einer trockenen Schüttung wird dabei vorzugsweise verstanden, daß das Schüttungsmaterial funktional trocken ist, d.h. strukturell stabil und rein mechanisch verdrängbar, ohne elastisches Nachgeben und/oder ohne viskoelastisches oder pastöses Fließverhalten. Das Schüttungsmaterial verhält sich bei seiner Verdrängung rein passiv.

Gemäß einer anderen Ausführungsform der Erfindung handelt es sich bei dem Schüttungsmaterial um feuchtes Schüttgut. Die Schüttung kann dann als feuchte körnige Schüttung bezeichnet werden. Auch in diesem Fall ist das Schüttungsmaterial vorzugsweise funktional trocken.

Gemäß einer Ausführungsform der Erfindung wird die Schüttung durch ein einziges Material gebildet. Das bedeutet, daß die gesamte Schüttung aus einem Schüttungsmaterial besteht.

Gemäß einer Ausführungsform der Erfindung besteht die Schüttung abschnittsweise, nämlich in horizontalen Richtung (entlang der x-Achse und/oder der y-Achse) und/oder in vertikaler Richtung (d.h. entlang der z-Achse, Materialebenen ausbildend) aus verschiedenen Schüttungsmaterialien.

Gemäß einer Ausführungsform der Erfindung wird die Schüttung durch ein mehrkomponentiges Schüttungsmaterial gebildet, das durch eine Mischung verschiedener Schüttungsmaterialien gebildet ist. Mit anderen Worten muß die Schüttung nicht homogen aufgebaut sein. Es können unterschiedliche Schüttungsmaterialien für die Schüttung verwendet werden. Die verschiedenen Schüttungsmaterialien können in Bereichen, Schichten usw. angeordnet sein. Auf diese Weise kann die Schüttung funktional unterschiedlich verwendet werden, z.B. kann eine obere Lage der Schüttung Schüttungsmaterial mit grober Körnung und eine untere Lage der Schüttung Schüttungsmaterial mit feiner Körnung aufweisen.

Werden verschiedene Schüttungsmaterialien oder mehrkomponentige Schüttungsmaterialien verwendet, weisen die verschiedenen Materialien bzw. Materialkomponenten vorzugsweise unterschiedliche Korngrößen (Körnungen) auf, um eine spätere mechanische Trennung des Gemisches zu ermöglichen und/oder zu vereinfachen.

Gemäß einer Ausführungsform der Erfindung dringt die Einbringungsvorrichtung in einem vor dem eigentlichen Aufbauprozeß stattfindenden Eindringschritt in die Schüttung ein, um sich an einer definierten Position in der Schüttung zu positionieren. Das Positionieren innerhalb der Schüttung findet insbesondere durch ein Einführen, Einstecken oder Eintauchen in die Schüttung statt, wobei durch das Einbringen der Einbringungsvorrichtung Schüttungsmaterial verdrängt wird. Das Eindringen der Einbringungsvorrichtung in die Schüttung erfolgt vorzugsweise von oben oder von der Seite, dabei jedenfalls so, daß die Formstabilität der Schüttung nicht wesentlich und die Funktion der Schüttung für den Aufbauprozeß nicht beeinträchtigt werden.

Die Einbringungsvorrichtung ist vorteilhafterweise derart ausgebildet, daß sie sich besonders gut zur Verdrängung von Schüttungsmaterial eignet, und das für die Schüttung verwendete Schüttungsmaterial ist derart gewählt, daß es sich durch die Einbringungsvorrichtung verdrängen läßt.

Vorzugsweise ist die Einbringungsvorrichtung Teil eines Arbeitskopfes, der neben der Einbringungsvorrichtung weitere an dem Aufbauprozeß beteiligte Funktionsvorrichtungen umfaßt.

Gemäß einer Ausführungsform der Erfindung sind mehrere Einbringungsvorrichtungen vorgesehen, die zur zeitlich versetzten oder gleichzeitigen Positionierung in ein und derselben Schüttung und/oder zur zeitlich versetzten oder gleichzeitigen Verwendung innerhalb dieser Schüttung zur Herstellung ein und desselben Formkörpers ausgebildet sind.

Es ist ebenfalls möglich, in ein und derselben Schüttung nacheinander oder gleichzeitig voneinander verschiedene Formkörper aufzubauen, zu welchem Zweck ebenfalls mehrere Einbringungsvorrichtungen vorgesehen sein können.

Gemäß einer Ausführungsform der Erfindung dringt eine Einbringungsvorrichtung in eine Schüttung ein, insbesondere in eine körnige Schüttung. Gemäß einer Ausführungsform der Erfindung ist die Schüttung dabei derart ausgeführt, daß der Verdrängungs- bzw. Eindringwiderstand der Schüttung schütthöhenabhängig ist, insbesondere direkt und unmittelbar von der Schütthöhe der Schüttung abhängig ist. Mit anderen Worten ist die zum Einsatz kommende Schüttung vorzugsweise dadurch definiert, daß sie der Einbringungsvorrichtung einen schütthöhen- bzw. eindringtiefenabhängigen Widerstand entgegensetzt. Neben dieser Schütthöhenabhängigkeit besteht bei den als Schüttungsmaterial vorzugsweise verwendeten granularen Medien eine Abhängigkeit des Eindringwiderstandes von Korngröße und -form sowie von der Packungsdichte (Schüttdichte/Porosität), da das Eindringen in die Schüttung Arbeit gegen die Kontaktkräfte zwischen den Körnern erfordert. Dies steht im Gegensatz zu Gelen, bei denen der Eindringwiderstand in erster Linie von dem Elastizitätsmodul des Materials abhängig ist und ein entsprechender Widerstand aus einer elastischen Verformung und gegebenenfalls einem viskoelastischen Verhalten des Materials folgt, und auch im Gegensatz zu Flüssigkeiten, bei denen der Verdrängungswiderstand in erster Linie ein dynamisches Strömungsproblem und geschwindigkeits-, viskositäts- und strömungsabhängig ist. Zusammenfassend erfolgt, anders als bei Flüssigkeiten oder Gelen, die Verdrängung des körnigen Schüttungsmaterials durch Umlagerung und Reibung einzelner Partikel. Das Schüttungsmaterial weist dabei keine kontinuierlichen, plastischen, viskoelastischen oder thixotropen Fließeigenschaften auf, sondern verhält sich als diskretes, granular aufgebautes Medium. Der Widerstand gegen Eindringen ergibt sich bei einer Schüttung aus der tiefenabhängigen Zunahme der Kontakt- und Reibungskräfte zwischen den Partikeln, während bei Flüssigkeiten und Gelen der Widerstand durch viskose oder viskoelastische Fließprozesse bestimmt ist.

Gemäß einer Ausführungsform der Erfindung ist die Schüttung derart ausgebildet, daß ein Arbeitsraum innerhalb der Schüttung bereitgestellt bzw. geschaffen werden kann. Gemäß einer Ausführungsform der Erfindung ist die Schüttung derart ausgebildet, daß die Schüttung den Arbeitsraum stützt, so daß Material in den Arbeitsraum einbringbar ist und/oder daß Material (Schüttungsmaterial, Einbringungsmaterial, Aufbaumaterial), insbesondere in dem Arbeitsraum enthaltenes und/oder in den Arbeitsraum eingebrachtes Material, in dem Arbeitsraum verbleibt. Die Schüttung entfaltet mit anderen Worten eine Stützwirkung gegenüber dem Arbeitsraum und/oder gegenüber dem Inhalt des Arbeitsraumes.

Gemäß einer Ausführungsform der Erfindung definiert die Stützwirkung der Schüttung nicht nur eine untere Begrenzung, Unterlage oder Auflage für den Arbeitsraum, sondern wirkt zusätzlich in wenigstens eine weitere Raumrichtung (räumlich partielle Stützwirkung). Befindet sich der Arbeitsraum vollständig innerhalb der Schüttung, erstreckt sich die Stützwirkung der Schüttung vorzugsweise nach allen Seiten (räumlich allseitige Stützwirkung).

Gemäß einer Ausführungsform der Erfindung dient die Schüttung als Formvorrichtung für den herzustellenden Formkörper, insbesondere im Sinn einer Schalung. Bewegt sich der Arbeitsraum entlang eines Aufbaupfades durch die Schüttung, erfüllt die Schüttung vorzugsweise die Funktion einer sich entlang des Aufbaupfades bewegenden Formvorrichtung.

Gemäß einer Ausführungsform der Erfindung wird der Arbeitsraum an der Position der Einbringungsvorrichtung in der Schüttung gebildet, insbesondere an der Position einer Abgabeöffnung der Einbringungsvorrichtung innerhalb der Schüttung. Anders ausgedrückt wird der Arbeitsraum unterhalb der Oberfläche der Schüttung, genauer gesagt in einer Eindringtiefe der Einbringungsvorrichtung gebildet. Der Arbeitsraum entsteht durch das Eindringen der Einbringungsvorrichtung in die Schüttung und ist durch das Vorhandensein der Einbringungsvorrichtung in der Schüttung sowie die Position der Abgabeöffnung der Einbringungsvorrichtung innerhalb der Schüttung definiert.

Gemäß einer Ausführungsform der Erfindung gibt es keine festen geometrischen Grenzen des Arbeitsraumes. Der Arbeitsraum weist somit auch kein bestimmtes, von vornherein festgelegtes Volumen auf. Der Arbeitsraum ist statt dessen vorzugsweise funktional definiert als ein sich entlang des Aufbaupfades bewegender Raumbereich, in dem Material verdrängt wird, und/oder als ein sich entlang des Aufbaupfades bewegender Raumbereich, in dem Material vermischt wird, und/oder als ein sich entlang des Aufbaupfades bewegender Raumbereich, in dem eine Verfestigung von Material stattfindet. Vorzugsweise ist der Arbeitsraum vollständig innerhalb der Schüttung angeordnet, d.h. der Arbeitsraum ist allseitig von der Schüttung umgeben. Die Größe des Arbeitsraumes kann je nach der gewählten Ausführungsvariante des Verfahrens variieren. Insbesondere kann die Größe des Arbeitsraumes von der Querschnittsfläche der Abgabeöffnung, von den Materialeigenschaften des Einbringungsmaterials und/oder von den Materialeigenschaften des Schüttungsmaterials beeinflußt sein. Vorzugsweise entspricht die Abmessung des Arbeitsraumes, insbesondere dessen Höhe, im wesentlichen der Höhe einer Schicht eines schichtweise aufgebauten Formkörpers.

Gemäß einer Ausführungsform der Erfindung ist die Eindringtiefe der Einbringungsvorrichtung größer als die Höhe des Arbeitsraumes. Vorzugsweise beträgt die Eindringtiefe der Einbringungsvorrichtung in die Schüttung 0,1 cm bis 150 cm, insbesondere 0,5 cm bis 30 cm.

Gemäß einer Ausführungsform der Erfindung bewegt sich die Einbringungsvorrichtung mit ihrer Abgabeöffnung entlang eines bestimmten, vordefinierten Pfades innerhalb der Schüttung. Der Pfad ist vorzugsweise ein dreidimensionaler Pfad mit Anteilen in allen drei Raumrichtungen (x, y, z).

Daß die Einbringungsvorrichtung in dieser Pfadrichtung bewegt wird bedeutet, daß sich die Position der Abgabeöffnung der Einbringungsvorrichtung und damit die Position des Arbeitsraumes innerhalb der Schüttung auf definierte Weise (Weg, Zeit, Geschwindigkeit) verändert. Aufgrund dieser resultierenden Bewegung des Arbeitsraumes kann ein entlang des Pfades bzw. entlang der Summe der Pfade stattfindender Aufbau des Formkörpers innerhalb der Schüttung erfolgen.

Gemäß einer Ausführungsform der Erfindung ist der Pfad ein Pfad aus einer Summe von Einzelpfaden, in die eine digitale Repräsentation des herzustellenden Formkörpers zerlegt ist und die das Volumen des herzustellenden Formkörpers abbilden. Vorzugsweise entspricht der entstehende Formkörper im wesentlichen der Summe der aktiven, also mit Einbringung von Material und/oder Energie erfolgten Pfadbewegungen.

Gemäß einer Ausführungsform der Erfindung verlaufen die Pfade nicht zwingend in planaren Schichten, d.h. der Arbeitsraum bewegt sich nicht zwingend in Schichten, die in einer Ebene liegen, insbesondere in der x-y-Ebene. Mit anderen Worten kann sich der Abstand der Abgabeöffnung der Einbringungsvorrichtung von der Oberfläche der Schüttung während des Einbringens ändern. Das bedeutet, daß die verwendeten Pfade im Prinzip beliebig im dreidimensionalen Raum verlaufen können. Gleichwohl verlaufen die Pfade vorzugsweise so, daß der Formkörper schichtweise aufgebaut wird.

Gemäß einer Ausführungsform der Erfindung kreuzen sich die Pfade nicht. Insbesondere sind die Pfade so gewählt, daß die Einbringungsvorrichtung während ihrer Bewegung innerhalb der Schüttung keine Pfade kreuzt, entlang welcher bereits Material und/oder Energie in die Schüttung eingebracht wurde.

Gemäß einer Ausführungsform der Erfindung sind die Pfade derart vorgesehen, daß der Formkörper bereichs- oder abschnittsweise aufgebaut wird. Das bedeutet insbesondere, daß verschiedene Teile des Formkörpers nacheinander, d.h. in einem zeitlichen Abstand voneinander, aufgebaut werden. Vorzugsweise berühren sich die nacheinander aufgebauten Formkörperbereiche oder -abschnitte, da sie entlang sich kontaktierender Einzelpfade aufgebaut werden, und werden auf diese Weise miteinander verbunden. Der Formkörper kann aber auch entlang eines einzigen durchgehenden Pfades aufgebaut werden, wobei sich Abschnitte des Pfades während des Aufbaus berühren, wodurch die einzelnen Formkörperbereiche oder -abschnitte miteinander verbunden werden.

Gemäß einer Ausführungsform der Erfindung beginnt der Aufbau des Formkörpers mit der Verfestigung eines ersten, initialen Formkörperbereiches im Inneren eines Bereiches einer Schüttung, in dem sich noch kein Formkörper befindet. An diesen ersten Formkörperbereich schließen sich - entsprechend dem Verlauf des wenigstens eines Aufbaupfades - weitere Formkörperbereiche an. Vorzugsweise dient der während der Ausführung des Verfahrens stattfindende Aufbauprozeß nicht lediglich zur Herstellung einer Verbindung zwischen bereits vorhandenen Bauteilen. Soll während der Ausführung des Verfahrens ein erster Formkörperbereich mit einem zweiten Formkörperbereich verbunden werden, dann handelt es sich dabei vorzugsweise um die Herstellung einer Verbindung eines bereits verfestigten ersten Bereiches des Formkörpers mit einem noch zu verfestigenden zweiten Bereich dieses Formkörpers, wobei beide Bereiche nacheinander durch einen Aufbauprozeß entlang des Aufbaupfades entstehen und die Verbindung der beiden Bereiche durch die dem Aufbau des Formkörpers dienenden Verfestigung des zweiten Bereiches erfolgt.

Gemäß einer Ausführungsform der Erfindung erfolgt die Bewegung der Einbringungsvorrichtung entlang des Pfades nicht manuell, sondern motorisch angetrieben. Zu diesem Zweck ist die Einbringungsvorrichtung mit einer geeigneten Positioniervorrichtung verbunden, mit deren Hilfe sie im Raum positionierbar ist. Die Positioniervorrichtung umfaßt zu diesem Zweck vorzugsweise drei oder mehr steuerbare Achsen.

Gemäß einer Ausführungsform der Erfindung erfolgt die Bewegung der Einbringungsvorrichtung entlang des Pfades automatisch, insbesondere gesteuert durch eine geeignete Steuerungseinheit.

Gemäß einer Ausführungsform der Erfindung steuert die Steuerungseinheit sowohl die Bewegung der Einbringungsvorrichtung durch die Schüttung als auch die von der Position der Einbringungsvorrichtung in der Schüttung abhängige Einbringung von Material und/oder Energie in die Schüttung.

Gemäß einer Ausführungsform der Erfindung umfaßt die Steuerungseinheit zu diesem Zweck einen Prozessor zur Ausführung eines Computerprogramms, das dem Verfahren entsprechende Computerprogrammanweisungen enthält und/oder ist mit einem entfernt angeordneten, einen solchen Prozessor aufweisenden Rechner verbunden oder verbindbar.

Gemäß einer Ausführungsform der Erfindung wird mit Hilfe der Einbringungsvorrichtung Einbringungsmaterial und/oder Energie in die Schüttung eingebracht, insbesondere thermische Energie oder Strahlungsenergie, z. B. durch einen Laser zum Erreichen einer Verfestigung durch Strahlungshärtung, oder durch ein Plasma. Mit anderen Worten erfolgt, insbesondere während der Bewegung der Einbringungsvorrichtung innerhalb der Schüttung, mit Hilfe der Einbringungsvorrichtung eine stoffliche und/oder nichtstoffliche Einbringung in die Schüttung. Material und Energie können dabei gleichzeitig oder nacheinander in die Schüttung eingebracht werden. Sofern Energie in die Schüttung eingebracht wird, handelt es sich insbesondere um Verfestigungsenergie, d.h. um Energie, die zum Verfestigen von Aufbaumaterial zur Herstellung des Formkörpers dient.

Gemäß einer Ausführungsform der Erfindung wird durch diese Einbringung eine Verfestigung von Aufbaumaterial eingeleitet oder initiiert. Daß durch die Einbringung eine Verfestigung von Aufbaumaterial eingeleitet oder initiiert wird, bedeutet, daß vor dieser Einbringung eine Verfestigung von Aufbaumaterial noch nicht begonnen hatte, insbesondere weil eine für den Verfestigungsvorgang notwendige Komponente (Material und/oder Energie) noch fehlte.

Gemäß einer Ausführungsform der Erfindung ist die Schüttung vor Beginn der Einbringung derart vorbereitet, daß alle für den Verfestigungsvorgang notwendigen Bestandteile bereits innerhalb der Schüttung vorhanden sind, bis auf den wenigstens einen Bestandteil (Material und/oder Energie), der zu einem von den Anwender bestimmbaren Zeitpunkt mit Hilfe der Einbringungsvorrichtung in die Schüttung eingebracht wird. Wie lange der Verfestigungsprozeß dauert, ist von der Art der Verfestigung abhängig.

Gemäß einer Ausführungsform der Erfindung ist die Einbringung derart vorgesehen, daß ein Einbringungsmaterial in die Schüttung ausgegeben wird, wodurch eine chemische Reaktion mit einem Schüttungsmaterial und/oder einem bereits zuvor in die Schüttung eingebrachten zweiten Einbringungsmaterial erfolgt, welche chemische Reaktion und die anschließende Verfestigung von Material noch andauert, während die Einbringungsvorrichtung bereits weiter entlang des Pfades durch die Schüttung bewegt wird.

Gemäß einer Ausführungsform der Erfindung ist die Einbringung derart vorgesehen, daß Energie, insbesondere thermische Energie, in die Schüttung eingebracht wird, um Schüttungsmaterial und/oder ein bereits zuvor in die Schüttung eingebrachtes Einbringungsmaterial durch Wärmezufuhr zu verfestigen. Die Einbringungsvorrichtung bzw. der die Einbringungsvorrichtung aufweisende Arbeitskopf wird zu diesem Zweck in das Innere der Schüttung bewegt. Vorzugsweise bleibt die Einbringungsvorrichtung in einem solchen Fall so lange an der Einbringungsposition positioniert, bis eine vollständige Verfestigung des Materials oder bis ein Mindestmaß an Verfestigung erreicht ist, das eine Weiterbewegung der Einbringungsvorrichtung entlang des Pfades erlaubt.

Das Einbringen von Material und/oder Energie in die Schüttung erfolgt vorzugsweise derart, daß Material und/oder Energie in den Arbeitsraum unterhalb der Oberfläche der Schüttung eingebracht wird. Insbesondere wird Material und/oder Energie im wesentlichen ausschließlich in den Arbeitsraum eingebracht, d.h. eine Einbringung von Material und/oder Energie in einen Bereich außerhalb des Arbeitsraumes findet nicht oder nur in einem unwesentlichen Umfang statt.

Gemäß einer Ausführungsform der Erfindung variiert die Art und Weise der Einbringung während des Vorgangs des Einbringens. Insbesondere werden nacheinander verschiedene Materialien und/oder Energien in die Schüttung eingebracht.

Gemäß einer Ausführungsform der Erfindung erfolgt das Einbringen selbst auf definierte Weise, d.h. eine bestimmte Quantität an Material (Gewicht, Volumen) und/oder Energie (Joule) wird innerhalb einer bestimmten Zeit in die Schüttung eingebracht, indem diese Quantität von der Einbringungsvorrichtung in den Arbeitsraum abgegeben wird.

Gemäß einer Ausführungsform der Erfindung erfolgt eine geeignete Steuerung der Abgabe von Material und/oder Energie innerhalb eines bestimmten Zeitraums derart, daß auf diese Weise die Geschwindigkeit und/oder die Genauigkeit der Formkörperherstellung beeinflußt werden.

Gemäß einer Ausführungsform der Erfindung erfolgt das Einbringen von Material und/oder Energie automatisch, insbesondere gesteuert durch eine geeignete Steuerungseinheit, insbesondere unter Berücksichtigung der Position der Einbringungseinrichtung entlang des Pfades, entsprechend der für die Herstellung des Formkörpers benötigten Menge an Aufbaumaterial bzw. entsprechend der benötigten Menge an Energie zur Verfestigung von Aufbaumaterial.

Gemäß einer Ausführungsform der Erfindung handelt es sich bei dem Einbringungsmaterial um Aufbaumaterial, d.h. um Material, welches zur Entstehung des Formkörpers verfestigt wird.

Gemäß einer Ausführungsform der Erfindung handelt es sich bei dem Einbringungsmaterial um ein Festkörpermaterial, insbesondere um ein körniges Material, z.B. ein Granulat oder Pulver. Als Einbringungsmaterial können aber grundsätzlich beliebige Materialien verwendet werden; das schließt Festkörper, Flüssigkeiten und Gase und beliebige Mischungen davon ein. Beispiele für Einbringungsmaterialien sind Zementleim, Ton und dergleichen.

Gemäß einer Ausführungsform der Erfindung handelt es sich bei dem Einbringungsmaterial um Material, aus dem Aufbaumaterial entsteht, beispielsweise mit Hilfe von weiterem Material und/oder durch Zugabe von Energie, wobei es sich bei dem weiteren Material um bereits in der Schüttung vorhandenes Material und/oder um in die Schüttung eingebrachtes, zusätzliches Einbringungsmaterial handelt.

Gemäß einer Ausführungsform der Erfindung handelt es sich bei dem Einbringungsmaterial um Material, das zur Entstehung von Aufbaumaterial benötigt wird, beispielsweise durch Vermischung von Materialien und/oder eine chemische Reaktion von Materialien. Insbesondere kann das Einbringungsmaterial entweder selbst das Aufbaumaterial bilden oder zur Bildung des Aufbaumaterials beitragen, insbesondere als ein Bestandteil des Aufbaumaterials oder als ein zur Bildung des Aufbaumaterials benötigtes Reaktionsmittel.

Gemäß einer Ausführungsform der Erfindung handelt es sich bei dem Einbringungsmaterial um ein erstes und wenigstens ein zweites Material, welches zweite Material vorzugsweise selektiv dem ersten Material beigemischt ist. Bei dem zweiten Material kann es sich beispielsweise um ein für den Formkörperaufbau oder dessen Verfestigung essentielles Material handeln. Bei dem zweiten Material kann es sich aber auch lediglich um eine nicht-essentielle Beimischung handeln, beispielsweise einen Farbstoff.

Gemäß einer Ausführungsform der Erfindung ist das Einbringungsmaterial ein- oder mehrkomponentig. Es können dann durch selektive Verfestigung unterschiedlicher Schüttungsmaterialien und/oder Einbringungsmaterialien, insbesondere Aufbaumaterialien, mehrkomponentige Formkörper hergestellt werden.

Wenn unterschiedliche Materialien als Einbringungs- bzw. Aufbaumaterialien verwendet werden, dann weisen diese Materialien vorzugsweise voneinander verschiedene Zusammensetzungen auf, so daß durch den gezielten Einsatz dieser Materialien, beispielsweise nacheinander oder miteinander auf definierte Weise gemischt, gezielt Bereiche des Formkörpers herstellbar sind, die unterschiedliche Eigenschaften aufweisen.

Gemäß einer Ausführungsform der Erfindung handelt es sich bei dem Einbringungsmaterial um reaktives Material. Mit anderen Worten reagiert das Einbringungsmaterial mit dem Schüttungsmaterial und/oder mit einem weiteren, zusätzlichen Einbringungsmaterial und/oder mit eingebrachter Energie.

Gemäß einer Ausführungsform der Erfindung handelt es sich bei dem Einbringungsmaterial um Material, das zur Verfestigung des Aufbaumaterials benötigt wird.

Gemäß einer Ausführungsform der Erfindung handelt es sich bei dem Einbringungsmaterial um kein Aufbaumaterial bildendes oder darstellendes Material, sondern statt dessen um ein den Verfestigungsprozeß unterstützendes oder ein für die Durchführung des Verfestigungsprozesses notwendiges Material, insbesondere um ein Schutzgas oder um einen Verfestigungsbeschleuniger.

Gemäß einer Ausführungsform der Erfindung dient eine erste Einbringungsvorrichtung zur Einbringung eines Aufbaumaterials und eine zweite Einbringungsvorrichtung dient zur Einbringung eines Schutzgases. Die zweite Einbringungsvorrichtung ist dabei vorzugsweise zusammen mit der ersten Einbringungsvorrichtung an ein und demselben Arbeitskopf befestigt, so daß beide Einbringungsvorrichtungen dieselbe Bewegung entlang des Aufbaupfades vollführen. Die Einbringung des Schutzgases kann dabei gleichzeitig mit oder zeitlich versetzt zu der Einbringung des Aufbaumaterials erfolgen.

Gemäß einer Ausführungsform der Erfindung wird durch die Einbringung von Einbringungsmaterial Schüttungsmaterial verdrängt. Hierzu muß sich das Schüttungsmaterial durch das Einbringungsmaterial verdrängen lassen. Wird das Schüttungsmaterial vollständig verdrängt, dient es gemäß einer Ausführungsform der Erfindung anschließend als Stützmaterial für den Formkörper und erfüllt auf diese Weise eine Schutz- und/oder Stützfunktion. Vorzugsweise umgibt in diesem Fall das Schüttungsmaterial den Raum, in dem der Formkörper durch Aushärten gebildet wird, wobei es sich dabei vorzugsweise um den Arbeitsraum handelt.

Gemäß einer Ausführungsform der Erfindung vermischt sich durch die Einbringung in die Schüttung eingebrachtes Einbringungsmaterial mit dem Schüttungsmaterial, anstatt das Schüttungsmaterial zu verdrängen. Bei dem zu verfestigenden Aufbaumaterial handelt es sich mit anderen Worten um durch die Einbringungsvorrichtung in die Schüttung eingebrachtes Einbringungsmaterial und/oder bereits in der Schüttung vorhandenes Schüttungsmaterial. Gemäß einer Ausführungsform der Erfindung dient Schüttungsmaterial anschließend als Stützmaterial für den Formkörper und erfüllt auf diese Weise eine Schutz- und/oder Stützfunktion. Vorzugsweise umgibt in diesem Fall Schüttungsmaterial den Raum, in dem der Formkörper durch Aushärten gebildet wird, wobei es sich dabei vorzugsweise um den Arbeitsraum handelt. Ob es zu einem Verdrängen von Schüttungsmaterial oder zu einem Vermischen mit Schüttungsmaterial kommt, hängt im wesentlichen von der Viskosität des Einbringungsmaterials ab.

Ein Vermischen findet vorzugsweise derart statt, daß das Einbringungsmaterial Zwischenräume und/oder Hohlräume in der Schüttung ausfüllt. Beispielsweise kann das Schüttungsmaterial eine grobe Körnung und das Einbringungsmaterial eine feine Körnung aufweisen. Das Einbringungsmaterial kann auch eine pastöse Masse sein, die unter Druck in die Schüttung eingebracht wird. Wenn sich das Einbringungsmaterial und das Schüttungsmaterial vermischen, bildet das Schüttungsmaterial zumindest anteilig den herzustellenden Formkörper. Mit anderen Worten wird gemäß einer Ausführungsform der Erfindung das Schüttungsmaterial zumindest teilweise Bestandteil des Formkörpers.

Gemäß einer Ausführungsform der Erfindung umfaßt das Einbringungsmaterial bereits einen Anteil an Schüttungsmaterial. Auch in diesem Fall wird das Schüttungsmaterial zumindest teilweise Bestandteil des Formkörpers, selbst wenn durch das Einbringen des Einbringungsmaterials das bereits in der Schüttung vorhandene Schüttungsmaterial vollständig verdrängt wird.

Gemäß einer Ausführungsform der Erfindung ist die Zusammensetzung des Einbringungsmaterials nicht gleichbleibend sondern wird in Abhängigkeit von der Eindringtiefe der Einbringungsvorrichtung bzw. des Arbeitskopfes verändert. Auf diese Weise kann in Abhängigkeit bzw. unter Berücksichtigung von Prozeßparametern, wie Geschwindigkeit des Arbeitskopfes, Eindringtiefe, Einbringdruck, Korngröße, Partikelform usw. die chemische Zusammensetzung der an dem Formkörperaufbau beteiligten Materialien vorteilhaft verändert werden.

Gemäß einer Ausführungsform der Erfindung umfaßt der Schritt des Einbringens nicht das Einbringen von Material, sondern es wird ausschließlich Energie in die Schüttung eingebracht. In diesem Fall bildet vorzugsweise allein das Schüttungsmaterial das Aufbaumaterial. Der Formkörper wird mit anderen Worten ausschließlich unter Verwendung des Schüttungsmaterials hergestellt.

Gemäß einer Ausführungsform der Erfindung erfolgt nacheinander ein Einbringen voneinander verschiedener Einbringungsmaterialien zum Aufbau einer Mehrzahl von Formkörpern, wobei diese Formkörper miteinander verbunden sind, vorzugsweise derart, daß der eine Formkörper den anderen Formkörper zumindest teilweise, vorzugsweise aber vollständig oder im wesentlichen vollständig umhüllt.

Gemäß einer Ausführungsform der Erfindung erfolgt in einem ersten Einbringungsschritt die Einbringung eines ersten Aufbaumaterials, vorzugsweise durch Verdrängung von Schüttungsmaterial, also unter Verwendung eines hochviskosen Materials, zur Herstellung eines innerhalb der Schüttung liegenden Hüllenbauteils definierter Form und Größe. Vorzugsweise ist das Hüllenbauteil als dünnwandige Schale ausgebildet. In einem anschließenden zweiten Einbringungsschritt erfolgt die Einbringung eines zweiten Aufbaumaterials in das Innere des Hüllenbauteils, vorzugsweise unter Vermischung mit dem Schüttungsmaterial, also unter Verwendung eines niedrigviskosen Materials, insbesondere derart, daß das Hüllenbauteil vollständig befüllt ist. Sowohl die Herstellung des Hüllenbauteils, insbesondere in einer Form als dünnwandige Schalung, als auch die Befüllung des durch das Hüllenbauteil gebildeten Schalraumes kann aufgrund der stützenden Wirkung sowie der hohen lokalen Halte- und Widerstandskraft der Schüttung erfolgen, ohne daß das Hüllenbauteil dadurch beschädigt oder deformiert wird.

Gemäß einer Ausführungsform der Erfindung wird mit Hilfe einer Einbringungsvorrichtung Schüttungsmaterial in die Schüttung eingebracht und/oder auf die Schüttung aufgebracht. Insbesondere kann es von Vorteil sein, daß während der Bewegung der Einbringungsvorrichtung, bei der eine Verfestigung in einem ersten Arbeitsraum erfolgt, gleichzeitig Schüttungsmaterial in die Schüttung eingebracht und/oder auf die Schüttung aufgebracht wird. Auf diese Weise wird die Höhe der Schüttung vergrößert. Insbesondere dient dieses Schüttungsmaterial zur Bildung eines Schüttungsbereiches, in dem sich die Einbringungseinrichtung zu einem späteren Zeitpunkt entlang eines Pfades bewegt, um einen weiteren Teil des Formkörpers herzustellen.

Zum Hinzufügen dieses weiteren Schüttungsmaterials zu der Schüttung kann diejenige Einbringungsvorrichtung verwendet werden, durch die Einbringungsmaterial in die Schüttung eingebracht wird, oder aber eine weitere Einbringungseinrichtung.

Gemäß einer Ausführungsform der Erfindung wird mit Hilfe einer Entnahmevorrichtung Material aus der Schüttung entnommen. Bei dem entnommenen Material handelt es sich um an dem Herstellungsverfahren beteiligtes Material und/oder um an dem Herstellungsverfahren nicht beteiligtes Material.

Gemäß einer Ausführungsform der Erfindung wird nicht für den Aufbau des Formkörpers verwendetes Schüttungsmaterial, insbesondere nach dem Verfestigungsprozeß noch immer loses, d.h. nicht verfestigtes Schüttungsmaterial, entfernt. Das entfernte Schüttungsmaterial wird vorzugsweise wiederverwendet.

Gemäß einer Ausführungsform der Erfindung erfolgt die Entnahme von Material aus der Schüttung gezielt, d.h. die Entnahme erfolgt an einer definierten Position innerhalb der Schüttung und/oder die Entnahme erfolgt zu einem definierten Zeitpunkt und/oder es erfolgt eine Entnahme eines bestimmten Materials.

Gemäß einer Ausführungsform der Erfindung, insbesondere während der Bewegung der Einbringungsvorrichtung entlang des Pfades innerhalb der Schüttung, werden im Zusammenhang mit der Herstellung des Formteils, insbesondere im Zusammenhang mit der Verfestigung von Material entstehende, den Aufbauprozeß störende und/oder verbindungshemmende Reaktions- oder Zwischenprodukte aus der Schüttung entfernt. Diese Entnahme von Reaktions- oder Zwischenprodukten, die sich im Arbeitsraum absetzen können oder ausgasen, erfolgt vorzugsweise unmittelbar an dem Ort ihrer Entstehung und/oder aus dem Arbeitsraum und/oder aus dem Inneren der Schüttung und/oder aus einer Verfestigungszone, wobei es sich bei einer solchen Verfestigungszone um einen nicht notwendigerweise mit dem Arbeitsraum identischen Bereich im Inneren der Schüttung handelt, in welchem eine Verfestigung stattfindet. Die Entnahme von Reaktionsprodukten erfolgt dabei vorzugsweise, bevor eine weitere Verfestigung von Aufbaumaterial entlang des Aufbaupfades erfolgt bzw. bevor die Einbringungsvorrichtung entlang des Pfades weiterbewegt wird.

Gemäß einer Ausführungsform der Erfindung erfolgt die Entnahme von Material, beispielsweise von Reaktionsprodukten, durch Absaugen.

Gemäß einer Ausführungsform der Erfindung erfolgen eine Einbringung von Material und eine Entnahme von Material derart, daß sich ein Zweckzusammenhang ergibt, insbesondere in Form eines Materialaustausches. Vorzugsweise wird Material mit einer Temperatur T (1) entfernt und durch Material mit einer Temperatur T(2)<T(1) ersetzt. Mit Hilfe eines solchen Austausches von heißem Material durch kaltes Material kann eine schnelle Energieabfuhr verwirklicht werden.

Gemäß einer Ausführungsform der Erfindung wird mit Hilfe einer Entnahmevorrichtung Energie aus der Schüttung entnommen. Vorzugsweise erfolgt dies durch Einsatz eines die Temperatur innerhalb des Arbeitsraumes oder innerhalb der Schüttung verringernden Funktionselements. Dabei handelt es sich vorzugsweise um ein geeignetes Kühlelement, eine Kaltgaseinblaseinheit oder dergleichen. Wie auch alle anderen Funktionselemente wird auch dieses Funktionselement vorzugsweise entlang des Aufbaupfades bewegt, vorzugsweise in einem definierten räumlichen Zusammenhang zu der Einbringungsvorrichtung. Vorteilhafterweise sind alle an dem Aufbauprozeß beteiligten Funktionsvorrichtungen Teil eines einzigen Arbeitskopfes.

Gemäß einer Ausführungsform der Erfindung ist die Schüttung derart ausgebildet, daß sich der gesamte herzustellende Formkörper innerhalb der Schüttung und unterhalb der Oberfläche der Schüttung befindet. Alternativ kann aber auch vorgesehen sein, daß die Schüttung lediglich ein Volumen umschließt, in dem der Verfestigungsprozeß stattfindet, insbesondere den Arbeitsraum. In einem solchen Fall können Teile des bereits hergestellten Formkörpers außerhalb der Schüttung angeordnet sein.

Gemäß einer Ausführungsform der Erfindung wird die Schüttung gezielt ortsgenau bereitgestellt, insbesondere auf eine Aufbauplattform oder auf einen Teil eines bereits hergestellten Formkörpers aufgebracht, um einen Ort innerhalb der Schüttung bereitstellen zu können, an dem durch ein Eindringen der Einbringungsvorrichtung der Arbeitsraum gebildet werden kann.

Gemäß einer Ausführungsform der Erfindung wird die Position der Schüttung mit dem Fortschreiten des Aufbauvorganges verändert, insbesondere derart, daß sich die für die Bereitstellung des Arbeitsraumes erforderlich Schüttung stets an derjenigen Stelle des Aufbaupfades befindet, an der die Herstellung des Formkörpers begonnen oder eine bereits stattfindende Herstellung des Formkörpers fortgesetzt wird.

Gemäß einer Ausführungsform der Erfindung umfaßt das Einbringungsmaterial ein oder mehrere Verstärkungselemente. Vorzugsweise wird unter einem Verstärkungselement ein sich von dem Einbringungsmaterial unterscheidendes, insbesondere einbringungsmaterialfremdes Element, insbesondere ein separates, zusätzlich zu dem Einbringungsmaterial vorgesehenes, in die Schüttung einzubringendes Bauteil verstanden, das vorzugsweise Bestandteil des Formteils wird, um das Formteil zu verfestigen. Gemäß einer Ausführungsform der Erfindung sind die Verfestigungselemente in dem Einbringungsmaterial enthalten und werden zusammen mit dem Einbringungsmaterial in die Schüttung eingebracht. Alternativ werden die Verfestigungselemente unabhängig von einem sonstigen Einbringungsmaterial als ein eigenes Einbringungsmaterial in die Schüttung eingebracht.

Gemäß einer Ausführungsform der Erfindung handelt es sich bei dem Verstärkungselement um eine Verstärkungsfaser, insbesondere zum Erreichen einer Faserverstärkung des herzustellenden Formteils. Bei der Faser kann es sich beispielsweise um eine Carbonfaser handeln, insbesondere um eine voraktivierte Carbonfaser. Andere geeignete Fasern sind beispielsweise Glasfasern, Naturfasern und Metallfasern.

Vorzugsweise wird die Faser im Arbeitsraum bzw. in der Schüttung abgelegt und verbleibt am Verlegeort. Zu diesem Zweck muß das Schüttungsmaterial verdrängbar sein, insbesondere muß es sich durch die Faser verdrängen lassen. Die verlegte Faser erstreckt sich nach der Einbringung entlang des Pfades der Einbringungsvorrichtung.

Kommen Verstärkungsfasern als Verstärkungselemente zum Einsatz, kommen Kurz-, Lang- oder Endlosfasern in Frage. Gemäß einer Ausführungsform der Erfindung werden als Verstärkungselemente Langfasern verwendet. Darunter werden in das Bauteil eingebrachte, diskontinuierliche Verstärkungsfasern mit einer Länge oberhalb der für die Lastübertragung erforderlichen kritischen Faserlänge verstanden.

Gemäß einer Ausführungsform der Erfindung erfolgt im Zusammenhang mit der Einbringung der Verstärkungsfasern, die typischerweise in Pfadrichtung erfolgt, oder im Anschluß an diese Einbringung, eine mechanische Verankerung der Verstärkungsfasern zur Herstellung eines Faserverbundes. Die Verankerung erfolgt dabei innerhalb des sich in dem Arbeitsraumes befindenden Materials und/oder außerhalb des sich in dem Arbeitsraumes befindenden Materials, d.h. innerhalb der Schüttung, um auf diese Weise eine verstärkende Funktion nach Art einer Bewehrung oder Armierung bereitzustellen, insbesondere um einen tragende, rißüberbrückende und/oder verfestigende Wirkung zu erzeugen.

Gemäß einer Ausführungsform der Erfindung kommen als Verstärkungselemente andere geeignete Elemente, wie Stäbe, Fasern, Netze, Gewebe oder vergleichbaren Einlagen zur Anwendung.

Gemäß einer Ausführungsform der Erfindung umfaßt die Einbringung von Material in die Schüttung das kombinierte Einbringen eines Aufbaumaterials und eines Verstärkungselements.

Gemäß einer Ausführungsform der Erfindung ist ein den Arbeitsraum in Pfadrichtung begrenzendes Begrenzungselement vorgesehen. Das Begrenzungselement ist dabei vorzugsweise derart ausgeführt, daß es den Arbeitsraum und/oder das herzustellende Formteil begrenzt und auf diese Weise den Verlauf der Kontur und/oder die Oberfläche des Formteils mitbestimmt. Vorzugsweise ist das Begrenzungselement entweder als Teil der Einbringungsvorrichtung ausgebildet, das sich mit der Einbringungsvorrichtung mitbewegt, oder das Begrenzungselement ist als ein in der Schüttung feststehend angeordnetes Bauteil ausgebildet, insbesondere derart, daß es entweder Teil des Formkörpers wird oder aber nach dem Herstellen des Formkörpers von diesem wieder gelöst wird.

Gemäß einer Ausführungsform der Erfindung ist ein Bewegungselement vorgesehen, das als Teil der Einbringungsvorrichtung oder eines Arbeitskopfes ausgeführt ist und sich in der Richtung des Aufbaupfades mit der Einbringungsvorrichtung mitbewegt. Dabei umfaßt das Bewegungselement ein Profil mit einer den herzustellenden Formkörper in Pfadrichtung formenden Kontur, so daß durch die Mitbewegung des Bewegungselements das Volumen des Formkörpers zumindest teilweise mitgeformt wird.

Gemäß einer Ausführungsform der Erfindung ist das Bewegungselement ausgeführt und gezielt temperierbar, so daß es als Heiz- und/oder Kühlelement eingesetzt werden kann. Auf diese Weise kann der Verfestigungsvorgang unterstützt werden, je nachdem, auf welchem Prinzip dieser beruht.

Gemäß einer Ausführungsform der Erfindung ist es vorgesehen, daß das Schüttungsmaterial und/oder das Einbringungsmaterial, insbesondere das Aufbaumaterial, verdichtet werden. Vorzugsweise erfolgt dieses Verdichten selektiv. Vorzugsweise erfolgt dieses Verdichten während der Bewegung der Einbringungsvorrichtung entlang des Pfades innerhalb der Schüttung. Insbesondere erfolgt das Verdichten mit Hilfe einer geeigneten Verdichtungseinrichtung, die vorzugsweise mit einem Offset zu dem Pfad positioniert ist, beispielsweise an der Einbringungsvorrichtung angebracht ist.

Gemäß einer Ausführungsform der Erfindung ist das Schüttungsmaterial derart gewählt, daß das während der Verfestigung des Formkörpers den Formkörper umgebende Schüttungsmaterial die Formhaltigkeit der Oberfläche des Formkörpers verbessert.

Gemäß einer Ausführungsform der Erfindung dient die Schüttung selbst als ein das herzustellende Formteil formendes Element. Je größer die Eindringtiefe der Einbringungsvorrichtung in die Schüttung ist, je tiefer also der Arbeitsraum unterhalb der Oberfläche der Schüttung liegt, desto größer ist der Verdrängungswiderstand, den das Schüttungsmaterial dem Arbeitskopf entgegenbringt, und desto größer ist der durch die Schüttung hervorgerufene und auf das Aufbaumaterial wirkende Druck, der insbesondere auf die von dem Abstand zur Schüttungsoberfläche abhängigen Verdichtung des Schüttungsmaterials zurückzuführen ist. Auf diese Weise bestimmt die Schüttung die Form des Formteils zumindest mit. Dabei umschließt die Schüttung das Aufbaumaterial bzw. das Formteil vorzugsweise vollständig. Mit anderen Worten dient die Schüttung vorzugsweise als eine formgebende Ummantelung des Formkörpers.

Gemäß einer Ausführungsform der Erfindung wird die Schüttung nicht ausschließlich aus Schüttungsmaterial gebildet. Vorzugsweise ist die Schüttung begrenzendes Stützmaterial vorgesehen. Auf diese Weise kann die benötigte Menge an Schüttungsmaterial minimiert werden.

Gemäß einer Ausführungsform der Erfindung wird, vorzugsweise während der Bewegung der Einbringungsvorrichtung, die Schüttung begrenzendes Stützmaterial selektiv entfernt und gegen Schüttungsmaterial ausgetauscht. Auf diese Weise kann die Zusammensetzung der Schüttung, insbesondere hinsichtlich des das benötigten Schüttungsmaterials, gezielt beeinflußt werden, insbesondere entlang des Pfades.

Gemäß einer Ausführungsform der Erfindung wird Schüttungsmaterial und/oder Stützmaterial während der Bewegung der Einbringungsvorrichtung auf eine Aufbaufläche, z.B. eine Bodenplatte od. dgl. und/oder auf eine vorhandene Schüttung aufgebracht.

Gemäß einer Ausführungsform der Erfindung ist die wenigstens eine Einbringungsvorrichtung zum punktuellen oder im wesentlichen punktuellen Einbringen von Material in die Schüttung ausgebildet. Das bedeutet, daß das Material nicht flächig in die Schüttung eingebracht wird, sondern an einem bestimmten Punkt entlang des Aufbaupfades. Vorzugsweise findet auch keine flächige Materialverfestigung oder eine Verfestigung als Volumenreaktion im Schüttungsmaterial statt, sondern die Verfestigung erfolgt ebenfalls punktuell oder im wesentlichen punktuell. Mit anderen Worten wird Material und/oder Energie vorzugsweise nur an solchen Stellen in die Schüttung eingebracht, an denen der herzustellende Formkörper entstehen soll.

Gemäß einer Ausführungsform der Erfindung werden Material und/oder Energie ausschließlich in solche Volumenbereiche der Schüttung eingebracht, die nach Abschluß des Aufbauprozesses den Formkörper beinhalten.

Gemäß einer Ausführungsform der Erfindung umfaßt die wenigstens eine Einbringungsvorrichtung mindestens ein Hohlprofil mit einer Abgabeöffnung. Das Hohlprofil, insbesondere in Gestalt eines Rohres oder Röhrchens, ist vorzugsweise konisch ausgeführt und weist eine Abgabeöffnung auf, die vorzugsweise endseitig angebracht ist und durch die hindurch Material und/oder Energie in die Schüttung ausgegeben wird. Es kann für die Abgabe von Material vorteilhaft sein, wenn das Hohlprofil oder die Abgabeöffnung als Düse ausgebildet sind.

Gemäß einer Ausführungsform der Erfindung umfaßt die Einbringungsvorrichtung zwei oder mehr Hohlprofile, die zur gleichzeitigen oder zeitlich versetzten Einbringung von Material und/oder Energie ausgebildet sind, und die auf definierte Weise zueinander angeordnet sind, wobei diese Anordnung vorzugsweise unveränderlich ist, so daß alle Hohlprofile einer Einbringungsvorrichtung dieselbe Bewegung der Einbringungsvorrichtung entlang des Pfades vollführen.

Gemäß einer Ausführungsform der Erfindung ist ein mit der Einbringungsvorrichtung verbundenes oder verbindbares Materialreservoir zur Bereitstellung von Einbringungsmaterial vorgesehen.

Ist wenigstens eine Entnahmevorrichtung vorgesehen, ist diese gemäß einer Ausführungsform der Erfindung ebenfalls als ein Hohlprofil, insbesondere in Gestalt eines Rohres oder Röhrchens, ausgebildet, das eine Entnahmeöffnung aufweist. Mit der Entnahmeöffnung, die vorzugsweise endseitig angebracht, ist die Entnahmevorrichtung in der Schüttung positionierbar.

Sind mehrerer Einbringungsvorrichtungen vorgesehen und/oder ist wenigstens eine Einbringungsvorrichtung sowie eine andere, in die Schüttung einbringbare Funktionsvorrichtung vorgesehen, wie beispielsweise eine Entnahmevorrichtung, dann erfolgt gemäß einer bevorzugten Ausführungsform der Erfindung ein koordiniertes, d.h. aufeinander abgestimmtes Bewegen dieser Funktionsvorrichtungen. Vorzugsweise werden diese Funktionsvorrichtungen entlang desselben Pfades oder entlang zueinander lediglich höhenversetzter Pfade bewegt. So können insbesondere zwei Einbringungsvorrichtungen parallel zueinander höhenversetzt durch die Schüttung hindurch bewegt werden, wobei die eine Einbringungsvorrichtung Einbringungsmaterial, insbesondere Aufbaumaterial, in die Schüttung einbringt, während eine weitere Einbringungsvorrichtung Schüttungsmaterial in die Schüttung einbringt oder auf die Schüttung aufbringt.

Gemäß einer Ausführungsform der Erfindung sind zwei Hohlprofile derart zueinander angeordnet, daß ein erstes Hohlprofil im Inneren eines zweiten Hohlprofils von diesem beabstandet angeordnet ist, insbesondere dergestalt, daß die Mittellängsachsen der Hohlprofile übereinstimmen. Auf diese Weise können besonders einfach unterschiedliche Einbringungen gleichzeitig an einen gemeinsamen Zielort innerhalb der Schüttung gebracht werden. Besonders vorteilhaft ist diese Ausführung zur gleichzeitigen Einbringung von verschiedenen Materialien und zur kombinierten Einbringung von Material und Energie.

Gemäß einer Ausführungsform der Erfindung ist neben der Einbringungsvorrichtung wenigstens eine weitere Funktionsvorrichtung vorgesehen, wobei sich jede dieser Funktionsvorrichtungen dadurch auszeichnet, daß sie über wenigstens ein Funktionselement verfügt, das in die Schüttung einbringbar ist. Ein Beispiel für eine Funktionsvorrichtung ist die zuvor beschriebene Entnahmevorrichtung.

Gemäß einer Ausführungsform der Erfindung ist wenigstens ein Teil des Arbeitsraumes als ein Freiraum ausgebildet, in dem sich kein Material, insbesondere kein Schüttungsmaterial befindet. Vorzugsweise wird zu einem späteren Zeitpunkt Material und/oder Energie in den Freiraum eingebracht, insbesondere Aufbaumaterial. Vorzugsweise ist dieser Freiraum allein aufgrund der Stützwirkung der ihn umgebenden Schüttung herstellbar.

Gemäß einer Ausführungsform der Erfindung ist als Funktionsvorrichtung eine Freiraumvorrichtung vorgesehen, deren Funktionselement zum Bilden eines Freiraumes innerhalb der Schüttung ausgebildet ist. Mit anderen Worten dient das Funktionselement dazu, innerhalb der Schüttung einen Hohlraum zu schaffen, der frei von Material ist, insbesondere frei von Schüttungsmaterial. Bei dem Funktionselement handelt es sich vorzugsweise um ein Element, das zur Bildung des Hohlraumes Material in andere Bereiche der Schüttung verdrängt, vorzugsweise ein glockenförmiges Verdrängungselement, oder um ein Element, das zur Bildung des Hohlraumes Material aus der Schüttung entfernt. Die Bildung eines Freiraumes innerhalb der Schüttung ist insbesondere in Verbindung mit dem Einbringen von Energie vorteilhaft, beispielsweise bei der Verwendung eines Plasmas oder zur Gewährleistung einer ausreichenden Isolation bei einem Aufschweißen von Metallpulver innerhalb des Arbeitsraumes.

Gemäß einer Ausführungsform der Erfindung sind alle an dem Verfahren beteiligten Funktionsvorrichtungen, einschließlich der Einbringungsvorrichtung, Teile eines einzigen Arbeitskopfes, der mit Hilfe der Steuerungseinheit definiert durch die Schüttung bewegt wird. Alternativ sind die beteiligten Funktionsvorrichtungen auf mehrere gleichzeitig oder nacheinander einsetzbare Arbeitsköpfe verteilt.

Gemäß einer Ausführungsform der Erfindung ist der in die Schüttung einbringbare Arbeitskopf zur Herstellung des Formkörpers multifunktional ausgestaltet, um den Aufbauprozeß zu ermöglichen oder zu unterstützen, insbesondere um eine Verfestigung von Aufbaumaterial einzuleiten. Hierfür weist der Arbeitskopf neben einer Zufuhr- bzw. Einbringungsfunktion für Material und/oder Energie, die in jedem Fall vorhanden ist, vorzugsweise eine Abfuhr- bzw. Entnahmefunktion für Material und/oder Energie, eine temperaturverändernde, d.h. heizende oder kühlende Funktion und/oder eine formgebende Funktion auf.

Gemäß einer Ausführungsform der Erfindung werden die Hohlprofile der Einbringungsvorrichtungen bzw. die anderen in die Schüttung eingebrachten Funktionselemente von Funktionsvorrichtungen, wie z.B. die Hohlprofile von Einnahmevorrichtungen, Begrenzungselemente und dergleichen, als Werkzeuge innerhalb der Schüttung verwendet. Diese Werkzeuge dienen dabei der Herstellung des Formkörpers oder unterstützen diese Herstellung. Vorzugsweise sind diese Funktionselemente derart ausgebildet, daß sie, trotzdem sie entlang eines gemeinsamen Aufbaupfades bewegt werden, voneinander verschiedene Wirkrichtungen aufweisen können.

Gemäß einer Ausführungsform der Erfindung wird die wenigstens eine Einbringungsvorrichtung und/oder eine andere Funktionsvorrichtung mechanisch beaufschlagt, um zusätzliche, insbesondere von der Bewegung entlang des Pfades abweichende und/oder nicht primär der Bewegung entlang des Pfades dienende Bewegungen zu vollführen. Diese zusätzlichen Bewegungen dienen insbesondere zur gezielten Beeinflussung der gewünschten Wirkung einer in die Schüttung eingebrachten Funktionsvorrichtung, insbesondere wenn diese in Form eines Hohlprofils ausgeführt ist. Vorzugsweise ist diese mechanische Beaufschlagung derart, daß sie eine Drehung um die Längsachse des Hohlprofils und/oder eine Vibration des Hohlprofils bewirkt.

Gemäß einer Ausführungsform der Erfindung dient die mechanische Beaufschlagung einer Funktionsvorrichtung zur Unterstützung der Bewegung des Hohlprofils bzw. eines anderen in die Schüttung eingebrachten anderen Funktionselements in der Schüttung. In einem solchen Fall dient beispielsweise eine Vibration dazu, um eine Verringerung der für die Bewegung der Einbringungsvorrichtung durch die Schüttung benötigten Kraft zu erreichen.

Gemäß einer Ausführungsform der Erfindung dient die mechanische Beaufschlagung einer Funktionsvorrichtung zur Herstellung der Fließfähigkeit eines Einbringungsmaterials oder zur Unterstützung des Transports des Einbringungsmaterials in die Schüttung. Hierzu eignet sich beispielsweise eine durch einen Ultraschallsignalgeber hervorgerufene Vibration.

Gemäß einer Ausführungsform der Erfindung dient die mechanische Beaufschlagung einer Funktionsvorrichtung zur Unterstützung einer Durchmischung und/oder Verbindung von Einbringungsmaterial und Schüttungsmaterial und/oder einer Verdichtung von Material.

Gemäß einer Ausführungsform der Erfindung dient die mechanische Beaufschlagung einer Funktionsvorrichtung zur Glättung der Oberfläche des Aufbaumaterials.

Gemäß einer Ausführungsform der Erfindung kommt eine Funktionsvorrichtung zur Anwendung, welche das Einbringungsmaterial, insbesondere Verstärkungselemente, insbesondere Verstärkungsfasern, derart mechanisch beaufschlagt, daß die Verstärkungselemente, vorzugsweise abweichend von ihrer Einbringungsrichtung, vollständig oder teilweise in einen Raum außerhalb des Arbeitsraumes verbracht werden. Vorzugsweise erfolgt die mechanische Behandlung der Verstärkungselemente derart, daß die Verstärkungselemente schichtübergreifend positioniert werden, einen Schichtverbund ausbildend. Vorzugsweise werden eine Vielzahl von Verstärkungselemente in den Arbeitsraum und/oder in die Schüttung eingebracht und anschließend mechanisch mit Hilfe der Funktionsvorrichtung derart behandelt, daß die Verstärkungselemente nicht nur mit dem Einbringungs- und/oder Schüttungsmaterial, sondern auch miteinander einen Verbund bilden.

Gemäß einer Ausführungsform der Erfindung umfaßt die Funktionsvorrichtung zur mechanischen Beaufschlagung der Verstärkungselemente einen vorzugsweise aktiv gesteuerten, mechanischen Stößelmechanismus, mit dessen Hilfe in Pfadrichtung eingebrachte Verstärkungselemente richtungsändernd in darunterliegende Bereich des Arbeitsraumes, darunterliegende Schichten eines schichtweise aufgebauten Formkörpers und/oder darunterliegende Bereiche der Schüttung eingebracht werden.

Vorzugsweise ist der Stößelmechanismus ausgebildet zur Beaufschlagung der Verstärkungselemente in unterschiedlichen Richtungen. Auf diese Weise lassen sich Materialbereiche mit besonders stark miteinander verbundenen Verstärkungselementen erzeugen. Vorzugsweise wird der Stößelmechanismus gleichzeitig mit dem Schichtauftrag betrieben. Vorzugsweise ist die Eindringtiefe des Stößels einstellbar, insbesondere derart, daß der Stößel in eine oder mehrere darunterliegende Schichten eindringt. Vorzugsweise ist die Stoßrichtung des Stößels steuerbar, um Verstärkungselemente gezielt in einem Winkel in darunterliegende Schichten einzubringen, wobei der Winkel vorzugsweise in einem Bereich von bis zu ± 60° bezogen auf die Vertikale bzw. die Pfadrichtung einstellbar ist.

Gemäß einer Ausführungsform der Erfindung wird als Schüttungsmaterial Schotter oder eine andere Gesteinskörnung (Splitt, Kies) verwendet und als Einbringungsmaterial ein geeignetes Polymer als Bindemittel, um einen Formkörper aus Polymerbeton herzustellen. Eine geeignete Funktionsvorrichtung, insbesondere eine Mischvorrichtung, wird verwendet, um eine ausreichende Benetzung des Schüttungsmaterials mit dem Einbringungsmaterial zu gewährleisten. Auf diese Weise kann mit einer vergleichsweise geringen Menge eines Polymerbindemittels ein Polymerbetonbauteil mit einer vorteilhafterweise hohen Porosität hergestellt werden. Zur Erhöhung der Festigkeit können zusätzlich Verstärkungselemente eingebracht werden.

Die Vorteile der Erfindung beruhen direkt oder indirekt auf der Schaffung eines Arbeitsraumes, der wahlweise - anteilig oder vollständig - auch als Freiraum ausgeführt sein kann, im Inneren einer Schüttung aus körnigem Schüttungsmaterial, wobei das Schüttungsmaterial vorzugsweise einen schüttungshöhen- bzw. eindringtiefenabhängigen Verdrängungswiderstand aufweist und den Arbeitsraum und/oder den Formkörper oder Teile davon stützt.

Mit Hilfe des Verfahrens können zur Herstellung von Formkörpern Materialien unterschiedlichster Art verwendet werden, wie Metalle, Nichtmetalle, mineralische Stoffe, Kunststoffe usw. Dabei können diese Materialien in nahezu beliebiger Form vorliegen, solange sich diese Form eignet, als Schüttungsmaterial und/oder Einbringungsmaterial im Sinne der Erfindung verwendet zu werden. Das Verfahren ist daher universell einsetzbar.

Das Verfahren ist außerdem nahezu beliebig skalierbar und auch aus diesem Grund universell anwendbar. Der herzustellende Formkörper kann ein Volumen von wenigen Kubikmillimeter aufweisen oder auch ein Volumen von mehreren Kubikmetern. Das Verfahren kann damit sowohl zur Herstellung großer Bauteile, insbesondere aus einem Betonmaterial oder dergleichen verwendet werden, wie sie beim Bau von Gebäuden zur Anwendung kommen, als auch zur Herstellung kleiner und kleinster Bauteile, beispielsweise durch Aufschmelzen von Metall- oder Keramikpulver.

Ausführungsbeispiele der Erfindung werden nachfolgend anhand der Zeichnungen näher erläutert. Hierbei zeigen:
- Fig. 1: einen in Pfadrichtung verlaufenden Schnitt durch eine Schüttung mit einer Materialeinbringung (Verdrängung des Schüttungsmaterials durch das Einbringungsmaterial),
- Fig. 2: einen in Pfadrichtung verlaufenden Schnitt durch eine Schüttung mit einer Materialeinbringung (Vermischung des Einbringungsmaterials mit dem Schüttungsmaterial),
- Fig. 3: einen in Pfadrichtung verlaufenden Schnitt durch eine Schüttung mit einer Energieeinbringung,
- Fig. 4: einen in Pfadrichtung verlaufenden Schnitt durch eine Schüttung mit einer Materialeinbringung gemäß Fig. 1 und zusätzlicher Einbringung einer Langfaser als Verstärkungselement,
- Fig. 5: einen quer zu der Pfadrichtung verlaufenden Schnitt durch eine Schüttung mit einer Materialeinbringung gemäß Fig. 1 und zusätzlicher Verwendung eines Begrenzungselements,
- Fig. 6: einen in Pfadrichtung verlaufenden Schnitt durch eine Schüttung mit einer Energieeinbringung gemäß Fig. 3 und zusätzlicher Einbringung eines Schutzgases,
- Fig. 7: eine schematische Abbildung einer Vorrichtung zur Herstellung eines Formkörpers,
- Fig. 8: einen Schnitt durch eine Schüttung, in der ein Betonbauteil hergestellt wird, das aus einer befüllten Schalstruktur besteht,
- Fig. 9: einen Schnitt durch eine Schüttung, in der ein dünnwandiges, faserverstärktes Betonbauteil hergestellt wird.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

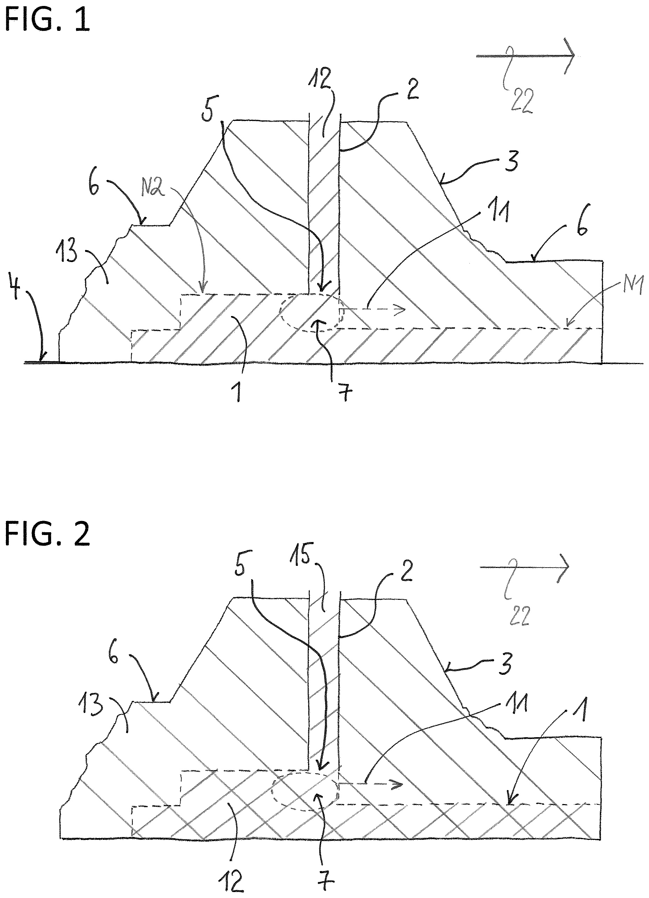

Wie in Fig. 1 skizziert, wird eine Einbringungsvorrichtung an einer definierten Position in einer trockenen körnigen Schüttung 3 positioniert, indem die Einbringungsvorrichtung in die Schüttung 3 eingetaucht wird. Die Schüttung 3 wurde zuvor auf einer Bodenplatte 4 aufgeschüttet.

Die Einbringungsvorrichtung umfaßt ein Hohlprofil 2 mit einer endseitigen Abgabeöffnung 5. An der Position der Abgabeöffnung 5 unterhalb der Oberfläche 6 der Schüttung 3 ist ein Arbeitsraum 7 gebildet.

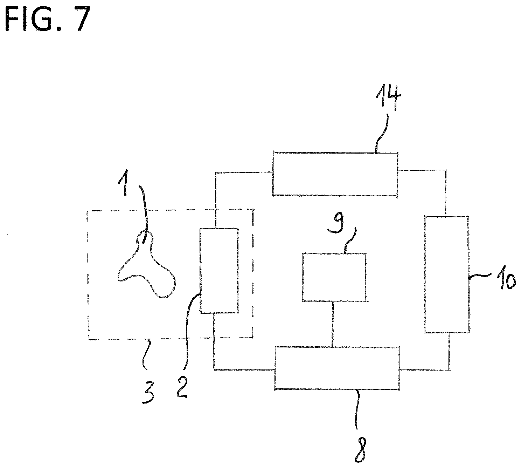

Das Hohlprofil 2 ist über eine Bereitstellungseinrichtung 8, die der Beförderung von Material dient und beispielsweise Rohrleitungen und Pumpen umfaßt, mit einem Materialbehälter 9 verbunden, in dem sich Aufbaumaterial befindet, siehe Fig. 7.

Eine digitale Repräsentation des herzustellenden Formkörpers 1 ist in Pfade zerlegt, die das Volumen des herzustellenden Formkörpers 1 abbilden. Diese Aufbaupfade sind in einem Datenspeicher einer Steuerungseinheit 10 abgelegt, siehe Fig. 7.

Das Hohlprofil 2 wird entlang eines durchgehenden Pfades 11 in Pfadrichtung 22 bewegt. Der Pfad 11 verläuft in dem hier gezeigten Beispiel in Schichten durch die Schüttung 2. Zugleich erfolgt während definierter Zeiträume, d.h. entweder dauerhaft oder in bestimmten zeitlichen Abständen, eine Einbringung von pastösem Aufbaumaterial 12 durch das Hohlprofil 2 in die Schüttung 3. Als Schüttungsmaterial 13 wird beispielsweise Kies verwendet. Als Aufbaumaterial 12 kommt Zementleim, Lehm oder ein Geopolymer zum Einsatz.

Durch die Einbringung des Aufbaumaterials 12 wird Schüttungsmaterial 13 verdrängt. Hierdurch wird in dem Arbeitsraum 7 schichtweise Aufbaumaterial 12 bereitgestellt, aus dem der Formkörper 1 entsteht. In dem dargestellten Ausschnitt ist eine erste Lage N1 des Formkörpers 1 bereits fertiggestellt und der an der Abgabeöffnung 5 gebildete Arbeitsraum 7 wird zur Bildung einer zweiten Lage N2 des Formkörpers 1 durch die Schüttung 3 bewegt. Die erste Lage N1 kann auf der Bodenplatte 4 aufliegen oder von der Bodenplatte 4 beabstandet im Inneren der Schüttung 3 angeordnet sein. Durch die Verdrängung von Schüttungsmaterial 13 verändert sich die Oberfläche 6 der Schüttung 3.

Nach Abschluß des Verfestigungsprozesses kann der Formkörper 1 aus der Schüttung 3 entnommen werden. Eine Nachbearbeitung des Formkörpers 1, beispielsweise ein Entfernen von Stützstrukturen oder dergleichen, ist nicht erforderlich.

Die Positionierung des Hohlprofils 2 in der Schüttung 3 sowie die Bewegung des Hohlprofils 2 durch die Schüttung 3 entlang des Aufbaupfades 11 erfolgt mit Hilfe einer Positioniervorrichtung 14, siehe Fig. 7.

Die Steuerungseinheit 10 dient zur Steuerung der Positioniervorrichtung 14 zur Positionierung des Hohlprofils 2 in der Schüttung 3 und zur Bewegung des Hohlprofils 2 entlang des Pfades 11 sowie zur Steuerung der Bereitstellungseinrichtung 8 zur Einbringung des Aufbaumaterials 12 in die Schüttung 3, siehe Fig. 7.

Das in Fig. 2 gezeigte Beispiel unterscheidet sich von dem Beispiel aus Fig. 1 dadurch, daß ein anderes Material in die Schüttung 3 eingebracht wird. In diesem Fall kommt Mörtel als Einbringungsmaterial 15 zum Einsatz. Das feinkörnige Einbringungsmaterial 15 vermischt sich mit dem grobkörnigen Schüttungsmaterial 13 Kies, indem es die in dem Schüttungsmaterial 13 vorhandenen Hohlräume ausfüllt. Auf diese Weise wird ein Aufbaumaterial für den Formkörper 1 bereitgestellt und der Formkörper 1 gebildet.

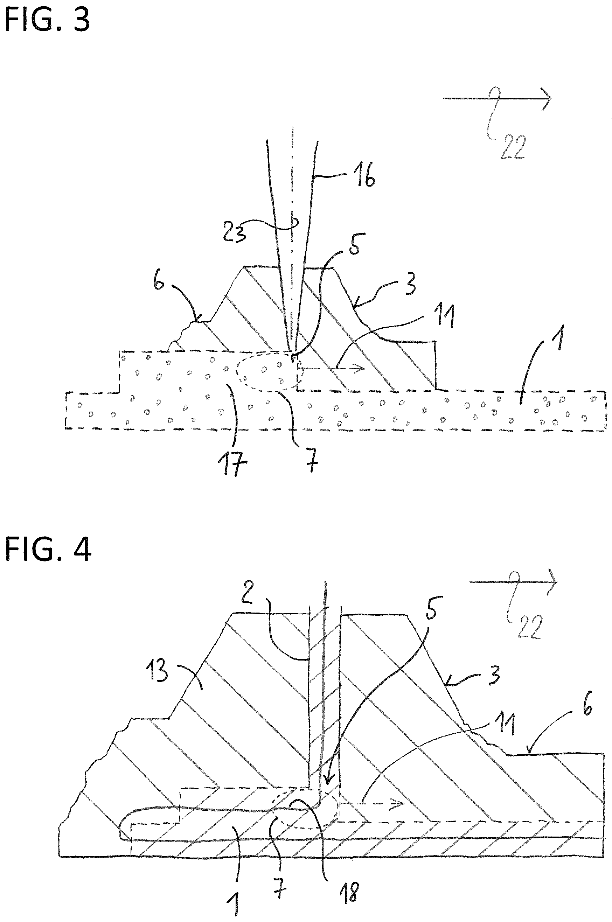

Eine andere Einbringungsvorrichtung wird für das in Fig. 3 abgebildete Beispiel verwendet. Erneut wird ein Hohlprofil 16 verwendet. Dieses dient jedoch zur Einbringung von thermischer Energie 22 zur Verfestigung eines Aufbaumaterials 17 im Bereich des Arbeitsraumes 7, der sich innerhalb der Schüttung 3 befindet. Die eingebrachte thermische Energie 22 ist in Fig. 3 durch einen angedeuteten Laserstrahl symbolisiert. Es ist eine entsprechend ausgebildete Bereitstellungseinrichtung zur Bereitstellung der Energie vorgesehen. Durch ein Bewegen des Hohlprofils 16 entlang eines definierten Aufbaupfades 11 wird die Energie in die zu verfestigenden Bereiche des Aufbaumaterials 17 eingebracht und das Aufbaumaterial 17 wird Lage für Lage verfestigt, wodurch der Formkörper 1 hergestellt wird.

Eine Variante des in Fig. 1 gezeigten Beispiels ist in Fig. 4 illustriert. Dabei wird zusammen mit Aufbaumaterial 12 ein Verstärkungselement in Form einer durchgehenden Langfaser 18 durch das Hohlprofil 2 in die Schüttung 3 eingebracht. Die Faser 18 erstreckt sich nach der Einbringung entlang des Pfades 11 und verbleibt am Verlegeort.

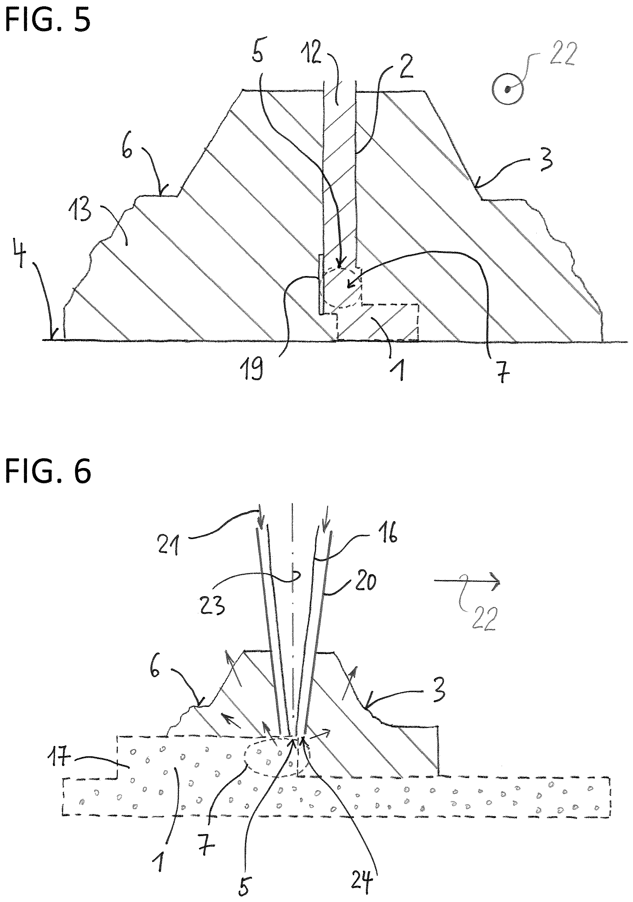

Eine weitere Abwandlung des in Fig. 1 gezeigten Beispiels ist in Fig. 5 abgebildet. An dem Hohlprofil 2 ist ein den Arbeitsraum 7 in Pfadrichtung 22 begrenzendes, plattenförmiges Begrenzungselement 19 angebracht, das zusammen mit dem Hohlprofil 2 entlang des Aufbaupfades 11 durch die Schüttung 3 bewegt wird. Das Begrenzungselement 19 unterstützt die Konturgebung des Formkörpers 1.

Fig. 6 zeigt ein gegenüber Fig. 3 abgewandeltes Beispiel einer Energieeinbringung. Das erste Hohlprofil 16, das zur Einbringung der thermischen Energie in die Schüttung 3 dient, um das Aufbaumaterial 17 zu verfestigen, ist derart beabstandet innerhalb eines zweiten Hohlprofils 20 angeordnet, daß der ringförmige Zwischenraum zwischen den beiden Hohlprofilen 16, 20 zur gleichzeitigen Einbringung eines Schutzgases in die Schüttung 3 unter Verwendung einer weiteren Abgabeöffnung 24 genutzt werden kann. Das Schutzgas ist durch Pfeile 21 symbolisiert.

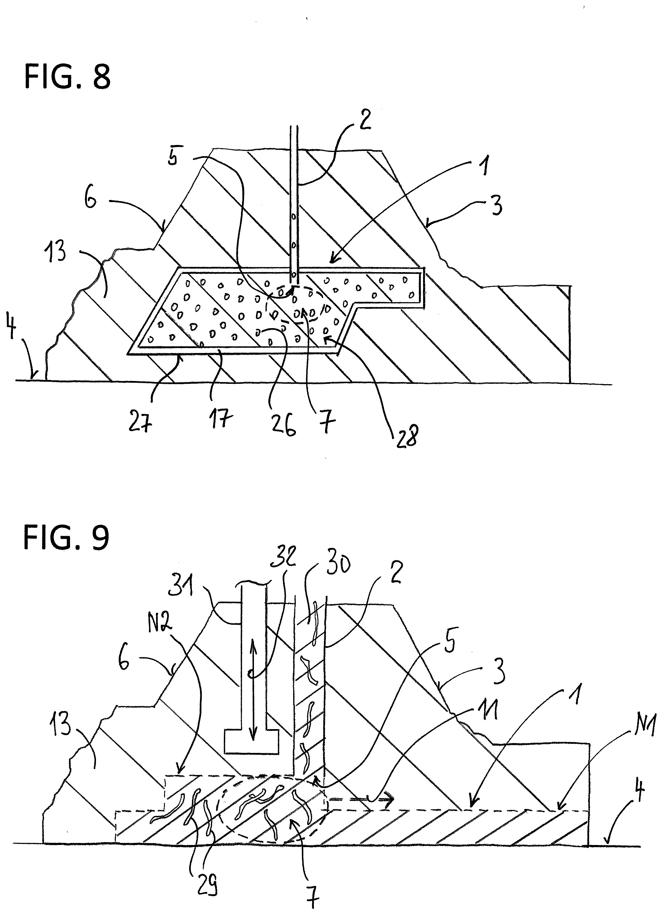

In Fig. 8 ist die Herstellung einer Betonbaustruktur 1 innerhalb einer trockenen, körnigen Schüttung 3 aus grobkörnigem Schüttungsmaterial 13 illustriert, das aus zwei aufeinanderfolgend hergestellten, mechanisch miteinander verbundenen Einzelformteilen besteht. Dabei erfolgt zunächst ein Einbringen eines hochviskosen ersten Aufbaumaterials 17, insbesondere eines geeigneten Zement/Sand-Gemisches, oder eines vergleichbaren, geeigneten Materials entlang eines dreidimensionalen Aufbaupfades innerhalb der Schüttung 3 mit Hilfe einer Einbringungsvorrichtung in Form eines Hohlprofils 2, wobei das Schüttungsmaterial 13 während des Einbringens durch das erste Aufbaumaterial 25 lokal mechanisch verdrängt wird, wodurch eine geometrisch definierte, dünnwandige Schalstruktur 27 entsteht, die vollständig von der Schüttung 3 umgeben und gestützt ist. Die Schalstruktur 27 bildet dabei eine im wesentlichen geschlossene Hülle. Die Schalstruktur 27 besteht vorzugsweise nur aus einer einzigen Lage Aufbaumaterial 25 und enthält vorzugsweise einen hohen Anteil an Langfasern (nicht abgebildet) als Verstärkungselemente. Auf diese Weise kann die Schalstruktur 27 schnell aufgebaut werden, härtet schnell aus und ist dennoch ausreichend stabil, insbesondere in Verbindung mit der die Schalstruktur 27 allseitig umhüllenden, stützenden Schüttung 3.

Im Anschluß an die vollständige Bildung der Schalstruktur 27 wird ein niedrigviskoses, zweites Aufbaumaterial 26, insbesondere ein Bindemittel-Gemisch, insbesondere ein geeignetes Zementleim-Gemisch oder ein vergleichbares, geeignetes Material, mit Hilfe des Hohlprofils 2 (alternativ mit Hilfe einer zweiten Einbringungsvorrichtung, nicht abgebildet) durch eine in der Schalstruktur 27 zu diesem Zweck vorgesehene Einführöffnung in das Innere 28 der Schalstruktur 27 eingebracht. Dabei wird die Schalstruktur 27 vollständig befüllt. Das zweite Aufbaumaterial 26 vermischt sich mit dem Schüttungsmaterial 13, indem es in die Zwischenräume des Schüttungsmaterials 13 eindringt, die dortigen Hohlräume ausfüllt und zusammen mit der Schalstruktur 27 zu einer festen Betonbaustruktur 1 aushärtet. Das Einbringen des zweiten Aufbaumaterials 26 kann ebenfalls entlang eines Aufbaupfades erfolgen. Nach dem Aushärten wird das auf diese Weise hergestellte Formteil, die Betonbaustruktur 1, aus der Schüttung 3 entnommen.

In Fig. 9 ist die Herstellung einer dünnwandigen, mehrdimensional faserverstärkten Betonstruktur 1 innerhalb einer trockenen, körnigen Schüttung 3 aus grobkörnigem Schüttungsmaterial 13 illustriert. Mittels einer Einbringungsvorrichtung, hier erneut in Form eines Hohlprofils 2, erfolgt ein schichtweises Einbringen eines mit einem hohen Anteil an Langfasern 29 versehenen Aufbaumaterials 30, insbesondere eines Zement/Sand-Gemisches, in die Schüttung 3, wobei jede einzelne Schicht N1, N2, ... durch lokale mechanische Verdrängung des Schüttungsmaterials 13 gebildet wird. Gleichzeitig mit dem Einbringen jeder neuen Schicht N werden mittels eines aktiv gesteuerten, mechanischen Stößelmechanismus 31 gezielte Stöße mit definierter Frequenz und Eindringtiefe ausgeführt, um Langfasern 29 der aktuell eingebrachten Schicht N2 lokal und gesteuert in bereits darunterliegende, zuvor eingebrachte Schichten N1 hineinzustoßen, um einen Schichtverbund herzustellen. Dabei ist die Eindringtiefe des Stößels steuerbar und zwischen einer und fünf darunterliegenden Schichten einstellbar. Ebenso ist die Stoßrichtung 32 steuerbar, so daß die Langfasern 29 in einem Winkel von bis zu ±60° bezogen auf die Vertikale in darunterliegende Schichten eingebracht werden.

Alle in der Beschreibung, den nachfolgenden Ansprüchen und den Zeichnungen dargestellten Merkmale können sowohl einzeln als auch in beliebiger Kombination miteinander erfindungswesentlich sein. Diese Merkmale bzw. Merkmalskombinationen können jeweils eine selbständige Erfindung begründen, deren Inanspruchnahme ausdrücklich vorbehalten ist.

Bei der Angabe einer eine Erfindung definierenden Merkmalskombination müssen einzelne Merkmale aus der Beschreibung eines Ausführungsbeispiels nicht zwingend mit einem oder mehreren oder allen anderen in der Beschreibung dieses Ausführungsbeispiels angegebenen Merkmalen kombiniert werden; diesbezüglich ist jede Unterkombination von Merkmalen eines oder mehrerer Ausführungsbeispiele ausdrücklich mitoffenbart.

Außerdem können gegenständliche Merkmale der Vorrichtung umformuliert als Verfahrensmerkmale Verwendung finden und Verfahrensmerkmale können umformuliert als gegenständliche Merkmale der Vorrichtung Verwendung finden. Auf diese Weise umformulierte Merkmale sind implizit mitoffenbart.

### Bezugszeichenliste

- 1: Formkörper
- 2: Hohlprofil
- 3: Schüttung
- 4: Bodenplatte
- 5: Abgabeöffnung
- 6: Oberfläche der Schüttung
- 7: Arbeitsraum
- 8: Bereitstellungseinrichtung
- 9: Materialbehälter
- 10: Steuerungseinheit
- 11: Pfad
- 12: Aufbaumaterial
- 13: Schüttungsmaterial
- 14: Positioniervorrichtung
- 15: Einbringungsmaterial
- 16: Hohlprofil
- 17: Aufbaumaterial
- 18: Verstärkungsfaser
- 19: Begrenzungselement
- 20: Hohlprofil
- 21: Schutzgas
- 22: Pfadrichtung
- 23: thermische Energie
- 24: Abgabeöffnung
- 25: erstes Aufbaumaterial
- 26: zweites Aufbaumaterial
- 27: Schalstruktur
- 28: Innenraum der Schalstuktur
- 29: Langfaser
- 30: Aufbaumaterial
- 31: Stößelmechanismus
- 32: Stoßrichtung

## Patentansprüche

1. Verfahren zur Herstellung eines dreidimensionalen Formkörpers (1) durch additive Fertigung, **dadurch gekennzeichnet, daß** sich eine in einer körnigen Schüttung (3) positionierte Einbringungsvorrichtung (2, 16, 20) entlang eines Pfades (11) bewegt und daß mit Hilfe der Einbringungsvorrichtung (2, 16, 20) eine Einbringung in die Schüttung (3) erfolgt, wodurch in einem unterhalb der Oberfläche (6) der Schüttung (3) gebildeten Arbeitsraum (7) Aufbaumaterial (12) bereitgestellt und/oder eine Verfestigung von Aufbaumaterial (12) eingeleitet wird, wodurch der Formkörper (1) entsteht.

2. Verfahren nach Anspruch 1, **gekennzeichnet durch** eine trockene körnige Schüttung (3).

3. Verfahren nach Anspruch 1 oder 2, **dadurch gekennzeichnet,**
- **daß** die Einbringungsvorrichtung (2, 16, 20) in die Schüttung (3) eindringt, um sich an einer definierten Position in der Schüttung (3) zu positionieren, und/oder
- **daß** durch ein Eindringen der Einbringungsvorrichtung (2, 16, 20) in die Schüttung (3) Schüttungsmaterial (13) verdrängt wird, und/oder
- **daß** der Arbeitsraum (7) an der Position der Einbringungsvorrichtung (2, 16, 20) in der Schüttung (3) gebildet wird, insbesondere an der Position einer Abgabeöffnung (5) der Einbringungsvorrichtung (2, 16, 20).

4. Verfahren nach einem der Ansprüche 1 bis 3, **dadurch gekennzeichnet, daß** mit Hilfe der Einbringungsvorrichtung (2, 16, 20) Einbringungsmaterial (12, 15) und/oder Energie (22), insbesondere thermische Energie oder Strahlungsenergie, in die Schüttung (3) eingebracht wird.

5. Verfahren nach Anspruch 4, **dadurch gekennzeichnet, daß** durch die Einbringung von Einbringungsmaterial (12, 15) Schüttungsmaterial (13) verdrängt wird.

6. Verfahren nach Anspruch 4 oder 5, **dadurch gekennzeichnet, daß** sich durch die Einbringung in die Schüttung (3) eingebrachtes Einbringungsmaterial (12, 15) mit Schüttungsmaterial (13) vermischt.

7. Verfahren nach einem der Ansprüche 1 bis 6, **dadurch gekennzeichnet, daß** wenigstens ein Teil des Arbeitsraumes (7) als ein Freiraum ausgebildet ist, in den Einbringungsmaterial (12, 15) und/oder Energie (22) eingebracht wird.

8. Verfahren nach einem der Ansprüche 1 bis 7, **dadurch gekennzeichnet, daß** die Schüttung (3) eine Stützwirkung gegenüber dem Arbeitsraum (7) und/oder gegenüber dem Inhalt des Arbeitsraumes (7) ausübt.

9. Verfahren nach einem der Ansprüche 1 bis 8, **dadurch gekennzeichnet, daß** mit Hilfe der Einbringungsvorrichtung (2, 16, 20) Schüttungsmaterial (13) in die Schüttung (3) eingebracht und/oder auf die Schüttung (3) aufgebracht wird.

10. Verfahren nach einem der Ansprüche 1 bis 9, **dadurch gekennzeichnet, daß** mit Hilfe der Einbringungsvorrichtung (2, 16, 20) ein Verstärkungselement (17) in die Schüttung (3) eingebracht wird, insbesondere ein zur Verstärkung des Formkörpers (1) dienendes Verstärkungselement (17).

11. Verfahren nach einem der Ansprüche 1 bis 10, **dadurch gekennzeichnet, daß** mit Hilfe einer Entnahmevorrichtung gezielt Material aus der Schüttung (3) entnommen wird.

12. Vorrichtung zur Herstellung eines dreidimensionalen Formkörpers (1) durch additive Fertigung, insbesondere ausgebildet zur Ausführung des Verfahrens nach einem der Ansprüche 1 bis 11, mit einer in einer körnigen Schüttung (3) positionierbaren Einbringungsvorrichtung (2, 16, 20) und mit einer Steuerungseinheit (10), die so ausgebildet ist, daß die Einbringungsvorrichtung (2, 16, 20) entlang eines Pfades (11) bewegt wird und daß mit Hilfe der Einbringungsvorrichtung (2, 16, 20) eine Einbringung in die Schüttung (3) erfolgt, wodurch in einem unterhalb der Oberfläche (6) der Schüttung (3) gebildeten Arbeitsraum (7) Aufbaumaterial (12) bereitgestellt und/oder eine Verfestigung von Aufbaumaterial (12) eingeleitet wird, wodurch der Formkörper (1) entsteht.

13. Vorrichtung nach Anspruch 12, **dadurch gekennzeichnet, daß** die Einbringungsvorrichtung mindestens ein Hohlprofil (2, 16, 20) mit einer Abgabeöffnung (5) umfaßt.
